# EUROPEAN PATENT APPLICATION

(11) **EP 4 574 911 A1**
(43) Date of publication of application: **25.06.2025**
(21) Application number: 23220128.5
(22) Date of filing: 22.12.2023
(51) Int. Cl.: C09B 61/00, C09B 67/50, C09B 67/16

(54) **BIO-SOURCED PHTHALOCYANINE COMPLEX, PREPARATION AND USE THEREOF**

(71) Applicant: Holland Colours N. V., 7323 RW Apeldoorn (NL)
(72) Inventor: BENDER, Timothy P., 7300 AS Apeldoorn (NL); ROELOFS, Jules Caspar Albert Anton, 7300 AS Apeldoorn (NL)
(74) Representative: V.O.

(57) **Abstract**

The invention is directed to a phthalocyanine complex, a method for preparing the phthalocyanine complex, a colour composition comprising the phthalocyanine complex, and the uses of the phthalocyanine complex.

The phthalocyanine complex of the invention has general formula (I): 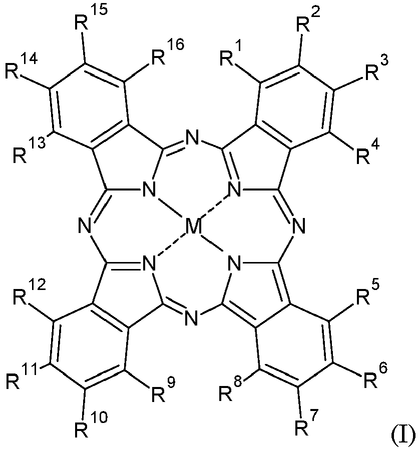 wherein R¹ - R¹⁶ are the same or different and each R¹ to R¹⁶ is individually selected from the group consisting of hydrogen, C₁-C₂₂ alkyl, C₃-C₂₂ alkenyl, C₃-C₂₂ alkynyl, chlorine, bromine, fluorine, iodine, sulphonate, and [(CH₂)ₙ-O-(CH₂)ₘ]ₒ, wherein n = 0-16, m = 1-16, o = 1-20, wherein M is selected from the group consisting of Cu, Ni, Zn, Co, Fe, Mn, and Al, and wherein the phthalocyanine complex has a bio-based carbon content of at least 10 % relative to the total mass of carbon in the phthalocyanine complex, as determined according to ASTM D 6866-22.

## Description

The invention is directed to a phthalocyanine complex, a method for preparing the phthalocyanine complex, a colour composition comprising the phthalocyanine complex, and the uses of the phthalocyanine complex.

Phthalocyanines are an important class of synthetic colourants, used for instance as automotive paints, printing inks and as dyes for polymers, textiles, and paper. Most relevant manufacturing processes for the production of phthalocyanines are a phthalonitrile process, and a phthalic anhydride/urea process, as discussed in Industrial Organic Pigments (2004), Chapter 3.1 by W. Herbst, K. Hunger.

US-A-5 393 339 relates to a process for preparing metal-containing phthalocyanines and chlorinated phthalocyanines for the use as colourants.

US-A-2007/0 179 285 discloses a process for preparing alkoxy-substituted, metal-containing phthalocyanines for the use as light-absorbent compounds in the light-writable information layer of optical data stores.

WO-A-01/42368 describes a process for preparation of alkyl-, alkenyl-, alkynyl-, aryl-, heteroaryl-, amine-, halogen-, ether-, ester-, and/or amide-substituted metal-containing phthalocyanines. These phthalocyanines seem to particularly useful for photosensitisation in pharmaceutical compositions due to their photodynamic properties.

The conventional, industrial-scale phthalocyanines synthesis routes, *i.e.* the phthalonitrile process, and the phthalic anhydride/urea process, typically utilise fossil-fuel based starting materials, *i.e.* chemicals, such phthalic anhydride or phthalonitrile derived through petrochemical processes. Due to the environmental and social concerns related to depleting fossil fuels reserves, there is a need to replace petroleum-based products, including dyes and pigments, with the corresponding products derived from natural, *e.g.* bio-sourced resources, as starting materials, *i.e.* chemicals.

Furthermore, certain phthalocyanine pigments, such as Phthalocyanine Blue 15 and Pigment Green 7, suffer from limited thermal stability which limits their application in colouring certain polymers, *e.g*. poly(vinyl chloride), polyolefins, such as polystyrene, polyethylene, polypropylene acrylonitrile butadiene styrene, polyphenylene oxide, polyether ketones, such as polyether ether ketone, polyesters, such as polyethylene terephthalate, and polyamides.

Additionally, phthalocyanine complexes in general exhibit limited solubility in organic solvents, polymeric matrices, and other suitable colourant compositions carriers.

Therefore, there is a need to improve the thermal stability of phthalocyanine dyes and pigments and/or their solubility in organic solvent, polymeric matrices, and/or other suitable colourant compositions carriers.

An objective of the invention is to overcome one or more of the disadvantages faced in the prior art.

Yet a further objective of the invention is to provide a non-petroleum-sourced phthalocyanine complex.

Yet a further objective of the invention is to provide a phthalocyanine complex with low carbon footprint.

Yet a further objective of the invention is to provide a phthalocyanine complex with low embodied energy.

Yet a further objective of the invention is to provide a phthalocyanine complex with improved thermal stability.

Yet a further objective of the invention is to provide a phthalocyanine complex with improved solubility in organic solvent, polymeric matrices, in particular in suitable colourant compositions carriers.

A further objective of the invention is to provide a colour composition, in particular a colour concentrate, comprising a non petroleum-sourced phthalocyanine complex.

Yet a further objective of the invention is to provide a phthalocyanine complex wherein all carbon sources of the phthalocyanine complex are from natural sources, such as plant, instead of from petroleum.

The inventors found that one or more of these objectives can, at least in part, be met by providing a phthalocyanine complex with a bio-based carbon content of at least 10 %.

The term "pigment" as used herein is meant to refer to an organic or inorganic coloured, black, or white material, which is substantially insoluble, *e.g.* at least 95 wt.% of the material is insoluble, *e.g.* in organic solvent, polymeric matrix, and other suitable colourant compositions carrier.

The term "dye" as used herein is meant to refer to an organic or inorganic coloured, black, or white material, which is substantially or completely soluble, *e.g.* at least 95 wt.% of the material is soluble, *e.g.* in organic solvent, polymeric matrix, and other suitable colourant compositions carrier.

Thereby, the same material, *e*.*g*. a chemical compound such as a phthalocyanine complex, can be both a pigment and a dye, depending on the medium in which it is dispersed or dissolved, respectively.

The terms "bio-based" and "bio-sourced" as used herein is meant to express that the compound was synthesised from a biological precursor, and specifically a renewable biological carbon source, such as biomass (as opposed to a non-renewable petroleum-based carbon source). The biomass can suitably be in the form of a plant. In particular, the terms "bio-based" and "bio-sourced" as used herein are meant to refer to a material or a chemical compound that is "isotopically rich" in carbon 14 (¹⁴C) as compared to a fossil-based material or a fossil-based chemical compound, as determined by ASTM D 6866-22. The term "isotopically rich" as used herein is meant to refer to a higher carbon 14 (¹⁴C) to carbon 12 (¹²C) ratio (¹⁴C/¹²C) in a material or a chemical compound as compared to the carbon 14 (¹⁴C) to carbon 12 (¹²C) ratio (¹⁴C/¹²C) in a fossil-based material or a fossil-based chemical compound.

The term "C₁-C₂₂ alkyl" as used herein is meant to refer to any alkyl substituent, linear or branched, consisting of between 1 and 22 carbon atoms, *e*.*g*. methyl, ethyl, propyl, isopropyl, butyl, isobutyl, *sec*-butyl, *tert*-butyl, pentyl, isopentyl, *sec*-pentyl, *ter*t-pentyl, neopentyl, *sec*-isopentyl, hexyl, heptyl, octyl, nonyl, decyl, undecyl, dodecyl, tridecyl, tetradecyl, pentadecyl, hexadecyl, heptadecyl, octadecyl, nonadecyl, eicosanyl, heneicosanyl, docosanyl.

The term "C₃-C₂₂ alkenyl" as used herein is meant to refer any all substituent, linear or branched, consisting of between 3 and 22 carbon atoms and comprising at least one double bond, *e.g*. propenyl, butenyl, isobutenyl, *sec*-butenyl, *tert*-butenyl, pentenyl, isopentenyl, *sec*-pentenyl, *tert*-pentenyl, neopentenyl, *sec*-isopentenyl, hexenyl, heptenyl, octenyl, nonenyl, decenyl, undecenyl, dodecenyl, tridecenyl, tetradecenyl, pentadecenyl, hexadecenyl, heptadecenyl, octadecenyl, nonadecenyl, eicosenyl, heneicosenyl, docosenyl.

The term "C₃-C₂₂ alkynyl" as used herein is meant to refer to linear or branched, consisting of between 3 and 22 carbon atoms and comprising at least one triple bond, *e*.*g*. propynyl, butynyl, isobutynyl, *sec*-butynyl, *tert*-butynyl, pentynyl, isopentynyl, *sec*-pentynyl, *tert*-pentynyl, neopentynyl, *sec*-isopentynyl, hexynyl, heptynyl, octynyl, nonynyl, decynyl, undecynyl, dodecynyl, tridecynyl, tetradecynyl, pentadecynyl, hexadecynyl, heptadecynyl, octadecynyl, nonadecynyl, eicosynyl, heneicosynyl, docosynyl.

The term "C₆-C₁₈ fatty acid" as used herein is meant to refer to linear or branched, saturated or unsaturated, consisting of between 6 and 18 carbon atoms, *e*.*g*. hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, decenoic acid, undecenoic acid, dodecenoic acid, tridecenoic acid, tetradecenoic acid, pentadecenoic acid, hexadecenoic acid, heptadecenoic acid, octadecenoic acid. The term "colour composition" as used herein is meant to refer to a composition that can suitably be used in a polymer composition, *e.g.* fibres, films, and coatings, inks, paints, *e.g.* water-based paints or solvent-based paints, textiles, or cosmetics. Preferably, the polymer composition comprises a thermoplastic polymer or a thermoset polymer such as a polyester and copolymers thereof, *e*.*g*. polyethylene terephthalate, polylactic acid, alkyd resin, polyester melamine; polyurethane and copolymers thereof; epoxy and copolymers thereof; poly(vinyl chloride); polyolefin and copolymers thereof, such as polystyrene, polyethylene, polypropylene acrylonitrile butadiene styrene, poly(ethylene-vinyl acetate); polyamide and co-polymers thereof; polycarbonate and copolymers thereof.

The composition may be prepared by concentrating one or more chemical compounds. If used as a colour concentrate, the colour composition typically comprises a component which is present in the colour composition at a higher level than intended for the final polymer composition. Hence, in accordance with the invention the colour composition of the invention that is intended for use as a dye or a pigment preferably in cosmetics, colour compositions, textiles, paints, and inks, comprises the phthalocyanine complex of the invention. The colour composition may be easy to dose, and has the advantage that it is possible to add the required amounts of the phthalocyanine complex of the invention to a polymer composition without unduly adding separate chemical compounds and/or unwanted other components in large amounts to the polymer composition. The colour composition can be incorporated in a polymer composition. Typically, the colour composition may be an intermediate product, primarily destined for further processing to acquire finished polymer products. Such colour compositions are well-known in the technical field to influence one or more chemical and/or physical properties (such as light transmittance and colour) of a polymer composition. At production temperatures, the colour composition may be solid or liquid. Preferably, the colour composition is solid at room temperature, and liquid at production temperature.

Preferably, the colour composition is liquid, *e*.*g*. the phthalocyanine complex dispersed in a liquid carrier, *e*.*g*. hydrocarbon oil, edible oil, ester, alcohol, trimethylolpropane ester, or a mixture of two or more thereof, preferably fatty acid ester of trimethylolpropane, more preferably wherein the fatty acid is a C₆ to C₁₈ fatty acid having a linear or branched chain, oleate or isostearate.

Preferably, the colour composition is solid, *e.g.* the phthalocyanine complex dispersed in a solid carrier, *e*.*g*. a polymer, such as a polyester and copolymers thereof, *e*.*g*. polyethylene terephthalate, polylactic acid, alkyd resin, polyester melamine; polyurethane and copolymers thereof; epoxy and copolymers thereof; poly(vinyl chloride); polyolefin and copolymers thereof, such as polystyrene, polyethylene, polypropylene acrylonitrile butadiene styrene, poly(ethylene-vinyl acetate); polyamide and copolymers thereof; polycarbonate and copolymers thereof.

Furthermore, the colour composition may be mixed with one or more commercially available colour compositions. In the art, the terms "colour composition" "concentrate" and "masterbatch" are used interchangeably.

The term "polyester" as used herein is meant to refer to polyester-based materials comprising one or more selected from the group consisting of aliphatic homopolymer polyesters, aliphatic copolymer polyesters, semi-aromatic copolymer polyesters, semi-aromatic homopolymer polyesters, aromatic copolymer polyesters, and aromatic homopolymer polyesters, though, not limited hereto.

The term "D90" as used herein is meant to refer to a particles (preferably a phthalocyanine complex particles) having at least 90 % of the particles having a particle size, *i.e.* a largest dimension, up to the D90 value based on number weighted particle size distribution.

In a first aspect, the invention is directed to a phthalocyanine complex of general formula (I): 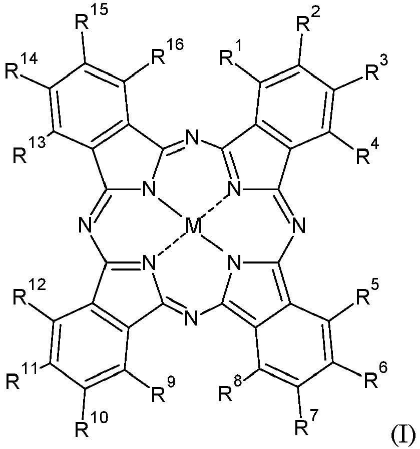 wherein each of R¹, R², R³, R⁴, R⁵, R⁶, R⁷, R⁸, R⁹, R¹⁰, R¹¹, R¹², R¹³, R¹⁴, R¹⁵, and R¹⁶, are the same or different and each of R¹, R², R³, R⁴, R⁵, R⁶, R⁷, R⁸, R⁹, R¹⁰, R¹¹, R¹², R¹³, R¹⁴, R¹⁵, and R¹⁶ is individually selected from the group consisting of hydrogen, C₁-C₂₂ alkyl, C₃-C₂₂ alkenyl, C₃-C₂₂ alkynyl, chlorine, bromine, fluorine, iodine, sulphonate, and [(CH₂)ₙ-O-(CH₂)ₘ]ₒ, wherein n = 0-16, m = 1-16, o = 1-20, wherein M is a metal atom selected from the group consisting of Cu, Ni, Zn, Co, Fe, Mn, and Al, and wherein the phthalocyanine complex has a bio-based carbon content of at least 10 % relative to the total mass of carbon in the phthalocyanine complex, as determined according to ASTM D 6866-22.

Preferably, the phthalocyanine complex has a bio-based carbon content of 15 % relative to the total mass of carbon in the phthalocyanine complex or more, 20 % or more, 25 % or more, 30 % or more, 35 % or more, 40 % or more, 45 % or more, 50 % or more, 55 % or more, 60 % or more, 65 % or more, 70 % or more, 75 % or more, 80 % or more, 85 % or more, 90 % or more, 95 % or more, 100 % or less, as determined according to ASTM D 6866-22.

Suitably, the phthalocyanine complex has a bio-based carbon content between 40 and 80 % relative to the total mass of carbon in the phthalocyanine complex, such as between 45 and 75 %, or between 50 and 70 %, as determined according to ASTM D 6866-22.

Suitably, the phthalocyanine complex has a bio-based carbon content between 95 and 100 % relative to the total mass of carbon in the phthalocyanine complex, as determined according to ASTM D 6866-22. The phthalocyanine complex of the invention wherein the phthalocyanine complex has a bio-based carbon content of at least 10 % relative to the total mass of carbon in the phthalocyanine complex, is particularly suitable to be used as, at least partially, preferably fully, bio-based colourant. The phthalocyanine complex is a desired alternative to the currently used phthalocyanine colourants obtained from the petroleum resources. Furthermore, the production of the phthalocyanine complex of the invention, wherein the phthalocyanine complex has a bio-based carbon content of at least 10 % relative to the total mass of carbon in the phthalocyanine complex, has advantageously lower impact on the environment, for instance the bio-based phthalocyanine has lower carbon footprint compared with the petroleum-based phthalocyanine.

Preferably, in the phthalocyanine complex each of R¹, R², R³, R⁴, R⁵, R⁶, R⁷, R⁸, R⁹, R¹⁰, R¹¹, R¹², R¹³, R¹⁴, R¹⁵, and R¹⁶ is hydrogen.

The phthalocyanine complex, wherein M is Cu, is advantageously the bio-based form of well-known phthalocyanine colourant, Phthalocyanine Blue 15 (CAS number 147-14-8). Advantageously, bio-based Phthalocyanine Blue 15 can be used without any major technology or equipment investments by the end-user while exhibiting desired performance of the petroleum-based Phthalocyanine Blue 15 (PB 15), such as PB15:0, PB15:1, PB15:3, PB15:4 or PB15:6.

Preferably, at least one of R¹, R², R³, R⁴, R⁵, R⁶, R⁷, R⁸, R⁹, R¹⁰, R¹¹, R¹², R¹³, R¹⁴, R¹⁵, and R¹⁶ is C₁-C₂₂ alkyl, C₃-C₂₂ alkenyl, and/or C₃-C₂₂ alkynyl, more preferably C₁-C₆ alkyl, C₃-C₆ alkenyl, and/or C₃-C₆ alkynyl. Preferably, at least four of R¹, R², R³, R⁴, R⁵, R⁶, R⁷, R⁸, R⁹, R¹⁰, R¹¹, R¹², R¹³, R¹⁴, R¹⁵, and R¹⁶ are C₁-C₂₂ alkyl, C₃-C₂₂ alkenyl, and/or C₃-C₂₂ alkynyl, more preferably, C₁-C₆ alkyl, C₃-C₆ alkenyl, and/or C₃-C₆ alkynyl. Preferably, at least eight of R¹, R², R³, R⁴, R⁵, R⁶, R⁷, R⁸, R⁹, R¹⁰, R¹¹, R¹², R¹³, R¹⁴, R¹⁵, and R¹⁶ are C₁-C₂₂ alkyl, C₃-C₂₂ alkenyl, and/or C₃-C₂₂ alkynyl, more preferably, C₁-C₆ alkyl, C₃-C₆ alkenyl, and/or C₃-C₆ alkynyl.

The inventors unexpectedly found that when at least one of R¹, R², R³, R⁴, R⁵, R⁶, R⁷, R⁸, R⁹, R¹⁰, R¹¹, R¹², R¹³, R¹⁴, R¹⁵, and R¹⁶ is C₁-C₂₂ alkyl, C₃-C₂₂ alkenyl, and/or C₃-C₂₂ alkynyl, the phthalocyanine complex advantageously exhibits higher thermal stability as compared to Phthalocyanine Blue 15. Advantageously, the phthalocyanine complex of the invention are particularly suitable for the use, *e.g.* as a colourant for polymers, *e*.*g*. polyesters, polyolefins, polyurethanes, polyamides, polycarbonates, requiring processing at high temperatures, *e*.*g*. above 250 °C, and/or which are exposed to high temperatures in their use.

Preferably, one of R¹ and R⁴ is methyl and one of R¹ and R⁴ is hydrogen, one of R⁵ and R⁸ is methyl and one of R⁵ and R⁸ is hydrogen, one of R⁹ and R¹² is methyl and one of R⁹ and R¹² is hydrogen, one of R¹³ and R¹⁶ is methyl and one of R¹³ and R¹⁶ is hydrogen, and each of R², R³, R⁶, R⁷, R¹⁰, R¹¹, R¹⁴, and R¹⁵ is hydrogen.

Preferably, each of R¹, R⁴, R⁵, R⁸, R⁹, R¹², R¹³, and R¹⁶ is methyl, and each of R², R³, R⁶, R⁷, R¹⁰, R¹¹, R¹⁴, and R¹⁵ is hydrogen.

Preferably, one of R¹ and R⁴ is methyl and one of R¹ and R⁴ is selected from the group consisting of chlorine, bromine, fluorine, and iodine, one of R⁵ and R⁸ is methyl and one of R⁵ and R⁸ is selected from the group consisting of chlorine, bromine, fluorine, and iodine, one of R⁹ and R¹² is methyl and one of R⁹ and R¹² is selected from the group consisting of chlorine, bromine, fluorine, and iodine, one of R¹³ and R¹⁶ is methyl and one of R¹³ and R¹⁶ is selected from the group consisting of chlorine, bromine, fluorine, and iodine, and each of R², R³, R⁶, R⁷, R¹⁰, R¹¹, R¹⁴, and R¹⁵ is selected from the group consisting of chlorine, bromine, fluorine, and iodine. Preferably, each R¹-R¹⁶ selected from the group consisting of chlorine, bromine, fluorine, and iodine is the same.

Preferably, one of R¹ and R⁴ is methyl and one of R¹ and R⁴ is chlorine, one of R⁵ and R⁸ is methyl and one of R⁵ and R⁸ chlorine, one of R⁹ and R¹² is methyl and one of R⁹ and R¹² is chlorine, one of R¹³ and R¹⁶ is methyl and one of R¹³ and R¹⁶ is chlorine, and each of R², R³, R⁶, R⁷, R¹⁰, R¹¹, R¹⁴, and R¹⁵ is chlorine.

Preferably, one of R¹ and R⁴ is methyl and one of R¹ and R⁴ is bromine, one of R⁵ and R⁸ is methyl and one of R⁵ and R⁸ bromine, one of R⁹ and R¹² is methyl and one of R⁹ and R¹² is bromine, one of R¹³ and R¹⁶ is methyl and one of R¹³ and R¹⁶ is bromine, and each of R², R³, R⁶, R⁷, R¹⁰, R¹¹, R¹⁴, and R¹⁵ is bromine.

Preferably, each of R¹, R⁴, R⁵, R⁸, R⁹, R¹², R¹³, and R¹⁶ is methyl, and each of R², R³, R⁶, R⁷, R¹⁰, R¹¹, R¹⁴, and R¹⁵ is selected from the group consisting of chlorine, bromine, fluorine, and iodine. Preferably, each R², R³, R⁶, R⁷, R¹⁰, R¹¹, R¹⁴, and R¹⁵ selected from the group consisting of chlorine, bromine, fluorine, and iodine is the same.

Preferably, each of R¹, R⁴, R⁵, R⁸, R⁹, R¹², R¹³, and R¹⁶ is methyl, and each of R², R³, R⁶, R⁷, R¹⁰, R¹¹, R¹⁴, and R¹⁵ is chlorine.

Preferably, each of R¹, R⁴, R⁵, R⁸, R⁹, R¹², R¹³, and R¹⁶ is methyl, and each of R², R³, R⁶, R⁷, R¹⁰, R¹¹, R¹⁴, and R¹⁵ is bromine.

Preferably, at least one of R¹, R², R³, R⁴, R⁵, R⁶, R⁷, R⁸, R⁹, R¹⁰, R¹¹, R¹², R¹³, R¹⁴, R¹⁵, and R¹⁶ is an ether with a structure [(CH₂)ₙ-O-(CH₂)ₘ]ₒ, wherein n = 0-16, m = 1-16, o = 1-20. Preferably, the ether either has a structure [O-(CH₂)]ₒ, [O-(CH₂)₂]ₒ, *i.e.* the ether is a polyethylene glycol oligomer or a polypropylene glycol oligomer, or the ether has a structure O-(CH₂)ₘ.

Without wishing to be bound by any theory, the inventors believe that ether-substituted phthalocyanines of general formula (I) exhibit improved solubility in organic solvents, such as for example, acetone, acetonitrile, anisole, benzene, butanol, chlorobenzene, chloroform, decanol, dichloromethane, diethyl ether, 1,4-dioxane, dimethylacetamide, dimethylformamide, dimethyl sulfoxide, ethanol, ethyl acetate, hexane, hexanol, heptane, heptanol, pentanol, propanol, isopropanol, methanol, *N*-methyl-2-pyrrolidone, tetrahydrofuran, 2-methyltetrahydrofuran, toluene, xylene, polymeric matrices, such as polyesters, polyolefins, and polyamides, and carriers, such as hydrogenated vegetable oils, fatty acids, fatty acids methyl esters, fatty acids sorbitol esters, fatty acids sorbitan esters, fatty acids pentaerythritol esters, monoglicerides, diglicerides, triglicerides, salts of fatty acids, amide waxes, polyethoxylated glycols and derivatives, polyethylene waxes and ethylenevinylacetate waxes, and mixtures thereof. Improved solubility advantageously enables to use the phthalocyanine of general formula (I) as a dye, for example in textiles and printing inks.

Preferably, at least one of R¹, R², R³, R⁴, R⁵, R⁶, R⁷, R⁸, R⁹, R¹⁰, R¹¹, R¹², R¹³, R¹⁴, R¹⁵, and R¹⁶ is chlorine, bromine, fluorine, and/or iodine, preferably at least one of R², R³, R⁶, R⁷, R¹⁰, R¹¹, R¹⁴, and R¹⁵ is chlorine, bromine, fluorine, and/or iodine. More preferably, at least one of R¹, R², R³, R⁴, R⁵, R⁶, R⁷, R⁸, R⁹, R¹⁰, R¹¹, R¹², R¹³, R¹⁴, R¹⁵, and R¹⁶ is chlorine and/or bromine. More preferably at least one of R², R³, R⁶, R⁷, R¹⁰, R¹¹, R¹⁴, and R¹⁵ is chlorine or at least one of R², R³, R⁶, R⁷, R¹⁰, R¹¹, R¹⁴, and R¹⁵ is bromine. Even more preferably, at least four of R¹, R², R³, R⁴, R⁵, R⁶, R⁷, R⁸, R⁹, R¹⁰, R¹¹, R¹², R¹³, R¹⁴, R¹⁵, and R¹⁶ are chlorine, bromine, fluorine, and/or iodine.

Even more preferably, at least four of R¹, R², R³, R⁴, R⁵, R⁶, R⁷, R⁸, R⁹, R¹⁰, R¹¹, R¹², R¹³, R¹⁴, R¹⁵, and R¹⁶ are chlorine and/or bromine.

More preferably, one of R² and R³ is chlorine or bromine and one of R² and R³ is hydrogen, one of R⁶ and R⁷ is chlorine or bromine and one of R⁶ and R⁷ is hydrogen, one of R¹⁰ and R¹¹ is chlorine or bromine and one of R¹⁰ and R¹¹ is hydrogen, one of R¹⁴ and R¹⁵ is chlorine or bromine and one of R¹⁴ and R¹⁵ is hydrogen, and each of R¹, R⁴, R⁵, R⁸, R⁹, R¹², R¹³, and R¹⁶ is hydrogen or at least one of R¹, R⁴, R⁵, R⁸, R⁹, R¹², R¹³, and R¹⁶ is C₃-C₂₂ alkyl, C₃-C₂₂ alkenyl, C₃-C₂₂ alkynyl, and/or [(CH₂)ₙ-O-(CH₂)ₘ]ₒ, wherein n = 0-16, m = 1-16, o = 1-20.

Preferably, one of R² and R³ is chlorine and one of R² and R³ is hydrogen, one of R⁶ and R⁷ is chlorine and one of R⁶ and R⁷ is hydrogen, one of R¹⁰ and R¹¹ is chlorine and one of R¹⁰ and R¹¹ is hydrogen, one of R¹⁴ and R¹⁵ is chlorine and one of R¹⁴ and R¹⁵ is hydrogen, and each of R¹, R⁴, R⁵, R⁸, R⁹, R¹², R¹³, and R¹⁶ is hydrogen or at least one of R¹, R⁴, R⁵, R⁸, R⁹, R¹², R¹³, and R¹⁶ is C₃-C₂₂ alkyl, C₃-C₂₂ alkenyl, C₃-C₂₂ alkynyl, and/or [(CH₂)ₙ-O-(CH₂)ₘ]ₒ, wherein n = 0-16, m = 1-16, o = 1-20.

Preferably, at least eight of R¹, R², R³, R⁴, R⁵, R⁶, R⁷, R⁸, R⁹, R¹⁰, R¹¹, R¹², R¹³, R¹⁴, R¹⁵, and R¹⁶ are chlorine, bromine, fluorine, and/or iodine. More preferably each of R² and R³ is chlorine or bromine, each of R⁶ and R⁷ is chlorine or bromine, each of R¹⁰ and R¹¹ is chlorine or bromine, and each of R¹⁴ and R¹⁵ is chlorine or bromine. Most preferably, each of R², R³, R⁶, R⁷, R¹⁰, R¹¹, R¹⁴ and R¹⁵ is chlorine or each of R², R³, R⁶, R⁷, R¹⁰, R¹¹, R¹⁴ and R¹⁵ is bromine. Preferably, each of R¹, R⁴, R⁵, R⁸, R⁹, R¹², R¹³, and R¹⁶ is hydrogen or at least one of R¹, R⁴, R⁵, R⁸, R⁹, R¹², R¹³, and R¹⁶ is C₃-C₂₂ alkyl, C₃-C₂₂ alkenyl, C₃-C₂₂ alkynyl, and/or [(CH₂)ₙ-O-(CH₂)ₘ]ₒ, wherein n = 0-16, m = 1-16, o = 1-20.

Preferably, at least fourteen, more preferably fifteen or sixteen, of R¹, R², R³, R⁴, R⁵, R⁶, R⁷, R⁸, R⁹, R¹⁰, R¹¹, R¹², R¹³, R¹⁴, R¹⁵, and R¹⁶ are chlorine, bromine, fluorine, and/or iodine, more preferably chlorine and/or bromine.

The phthalocyanine complex of the invention, in particular wherein M is Cu and at least fourteen of R¹, R², R³, R⁴, R⁵, R⁶, R⁷, R⁸, R⁹, R¹⁰, R¹¹, R¹², R¹³, R¹⁴, R¹⁵, and R¹⁶ are chlorine, is advantageously a direct replacement of well-known phthalocyanine colourant, Pigment Green 7 (PG7, CAS number 1328-53-6). Advantageously, bio-based Pigment Green 7 can be used without any major technology or equipment investments by the end-user while exhibiting desired performance of the petroleum-based Pigment Green 7. Without wishing to be bound by theory, the inventors believe that at least partially halogenated phthalocyanines advantageously exhibit improved lightfastness and thermal stability compared to Phthalocyanine Blue 15.

Preferably, at least 50 % of the number of the phthalocyanine complex particles, preferably 55 % or more, or 60 % or more, or 65 % or more, or 70 % or more, or 75 % or more, or 80 % or more, or 85 % or more, or 90 % or more, or 95 % or more, or 97 % or more, or 100 % or less, is in a crystal form, as determined by X-ray diffraction. At least 50 % of the number of the phthalocyanine complexes, such as at least 60 %, at least 70 %, at least 80 %, at least 90 %, or at least 95 %, may be in an α crystal form, as determined by X-ray diffraction. At least 50 % of the number of the phthalocyanine complexes, such as at least 60 %, at least 70 %, at least 80 %, at least 90 %, or at least 95 %, may be in an β crystal form, as determined by X-ray diffraction.

The phthalocyanine complex may be a Phthalocyanine Blue 15:1, that predominantly exists in the α crystal form crystal form.

The phthalocyanine complex may be a Phthalocyanine Blue 15:3, that predominantly exists in the β crystal form crystal form.

The crystal form of the phthalocyanine may be determined, e.g., by X-ray diffraction, by Raman spectroscopy, or a combination thereof.

Without wishing to be bound by any theory, the inventors believe that the phthalocyanine complex of the invention at least partially present in its crystalline form exhibits stable, desired colour.

Preferably, the phthalocyanine complex of the invention is in particulate form having D90 = 50 µm, more preferably D90 between 5 and 30 µm, and even more preferably D90 between 5 and 25 µm, as determined by an optical microscopy.

The inventors observed that the phthalocyanine complex of the invention having at D90 = 50 µm, more preferably D90 between 5 and 30 µm, and even more preferably D90 between 5 and 25 µm exhibits excellent colour strength and good overall performance.

The invention also pertains to a method for preparing phthalocyanine complex of the invention comprising the steps of:
A) reacting a urea or derivative thereof, a phthalic anhydride or derivative thereof, and a metal salt, optionally in a solvent, optionally in the present of a catalyst to obtain the phthalocyanine complex particles, wherein the phthalic anhydride or derivative thereof has a bio-based carbon content of at least 10 % relative to the total mass of carbon in phthalic anhydride or derivative thereof, or at least 15 %, or at least 20 %, or at least 25 %, or at least 30 %, or at least 35 %, or at least 40 %, or at least 45 %, or at least 50 %, or at least 55 %, or at least 60 %, or at least 65 %, or at least 70 %, or at least 75 %, or at least 80 %, or at least 85 %, or at least 90 %, or at least 95 %, or at least 97 %, or 100 % or less, as determined according to ASTM D 6866-22.

Advantageously, the phthalic anhydride or derivative thereof having a bio-based carbon content of at least 10 % relative to the total mass of carbon in phthalic anhydride or derivative thereof exhibit lower carbon footprint and lower embodied energy compared to their petrochemical counterparts.

Suitably, urea or derivative thereof, *e*.*g*. ammonia, biuret, guanidine, dicyandiamide, are used in the method of the invention. Preferably, urea is used in the method of the invention.

The phthalic anhydride or derivative thereof has a structure according to general formula (II), 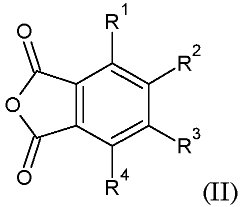 wherein each of R¹, R², R³, and R⁴ are the same or different and each of R¹, R², R³, and R⁴ is individually selected from the group consisting of hydrogen, C₁-C₂₂ alkyl, C₃-C₂₂ alkenyl, C₃-C₂₂ alkynyl, chlorine, bromine, fluorine, iodine, sulphonate, and [(CH₂)ₙ-O-(CH₂)ₘ]ₒ, wherein n = 0-16, m = 1-16, o = 1-20.

Preferably, each of R¹, R², R³, and R⁴ is hydrogen.

Preferably, at least one of R¹, R², R³, and R⁴ is C₁-C₂₂ alkyl, C₃-C₂₂ alkenyl, C₃-C₂₂ alkynyl, preferably at least one of C₁-C₆ alkyl, C₃-C₆ alkenyl, C₃-C₆ alkynyl. More preferably, R¹ is methyl and each of R², R³, and R⁴ is hydrogen. More preferably, each of R¹ and R⁴ is methyl, and each of R² and R³ is hydrogen.

Preferably, R² is chlorine or bromine, and each of R¹, R³, and R⁴ is hydrogen. Suitably, each of R² and R³ is chlorine or bromine, and each of R¹ and R⁴ is hydrogen. Suitably, R¹, R², R³, and R⁴ is chlorine or bromine.

Preferably, each of R² and R³ is selected from the group consisting of chlorine, bromine, fluorine, and iodine, and each of R¹ and R⁴ is selected from the group consisting of C₁-C₂₂ alkyl, C₃-C₂₂ alkenyl, C₃-C₂₂ alkynyl, preferably C₁-C₆ alkyl, C₃-C₆ alkenyl, C₃-C₆ alkynyl. More preferably, each of R² and R³ is chlorine, and each of R¹ and R⁴ is methyl. More preferably, each of R² and R³ is bromine, and each of R¹ and R⁴ is methyl. Preferably, each of R¹, R² and R³ is selected from the group consisting of chlorine, bromine, fluorine, and iodine, and R⁴ is selected from the group consisting of C₁-C₂₂ alkyl, C₃-C₂₂ alkenyl, C₃-C₂₂ alkynyl, preferably C₁-C₆ alkyl, C₃-C₆ alkenyl, C₃-C₆ alkynyl. More preferably, each of R¹, R² and R³ is chlorine and R⁴ is methyl. More preferably, each of R¹, R² and R³ is bromine and R⁴ is methyl.

Preferably, R¹ is [(CH₂)ₙ-O-(CH₂)ₘ]ₒ, wherein n = 0-16, m = 1-16, o = 1-20, and each of R², R³, and R⁴ is hydrogen. Suitably, each of R¹ and R⁴ is [(CH₂)ₙ-O-(CH₂)ₘ]ₒ, wherein n = 0-16, m = 1-16, o = 1-20, and each of R² and R³ is hydrogen.

Certain phthalic anhydride derivatives, e.g. phthalic anhydride derivative of general formula (III) or (IV), 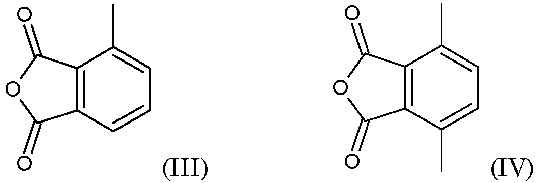 with a bio-based carbon content of at least 10 % relative to the total mass of carbon in the phthalic anhydride derivative, or at least 15 %, or at least 20 %, or at least 25 %, or at least 30 %, or at least 35 %, or at least 40 %, or at least 45 %, or at least 50 %, or at least 55 %, or at least 60 %, or at least 65 %, or at least 70 %, or at least 75 %, or at least 80 %, or at least 85 %, or at least 90 %, or at least 95 %, or at least 97 %, or 100 % or less, as determined according to ASTM D 6866-22, are available from Relement BV.

Bio-based phthalic anhydride and derivatives thereof can be obtained by Diels-Alder reaction between bio-based furan or derivative thereof and, preferably bio-based, maleic anhydride.

The method for obtaining bio-based phthalic anhydride and derivatives thereof is, for instance, disclosed in US-A-2017/0 355 710, the complete content of which is herewith incorporated by reference.

Maleic anhydride can be obtained from bio-based levulinic acid derivatives, *e*.*g*. methyl levulinate, via its oxidation to form maleic anhydride, as disclosed in US-B-10 556 852, the complete content of which is herewith incorporated by reference.

Alternatively or in addition, bio-based phthalic anhydride or derivatives thereof can be obtained via oxidation of bio-based o-xylene. Bio-based o-xylene is available from BioBTX BV. Oxidation of o-xylene is disclosed by Dubey *et al.* in *Asian Journal of Chemistry* 1996, *8*(3), 341-345, the complete content of which is herewith incorporated by reference.

The metal salt is any organic or inorganic salt of the metal M selected form the group consisting of Cu, Ni, Zn, Co, Fe, Mn, and Al. Preferably, the salt is selected from the group consisting of chloride, bromide, iodide, fluoride, carbonate, sulphate, phosphate, and nitrate, most preferably chloride, carbonate, and sulphate.

Preferably, the method comprises reacting urea or derivative thereof, phthalic anhydride or phthalic derivative thereof and the metal salt in the solvent, in the present of the catalyst to obtain the phthalocyanine complex particles.

The solvent can be any suitable solvent with a boiling point above 180 °C, *e*.*g*. 1,2,4-trichlorobenzene, nitrobenzene, naphthalene, kerosene, ethylene glycol, camphor, dimethyl sulfoxide, and mixtures thereof. More preferably, the solvent is selected form the group consisting of 1,2,4-trichlorobenzene, nitrobenzene, naphthalene, kerosene, ethylene glycol, and mixtures thereof.

The catalyst can be any suitable catalyst for catalysing phthalocyanine synthesis known in the art, more preferably, the catalyst is selected from the group consisting of boric acid, molybdenum oxide, zirconium tetrachloride, titanium tetrachloride, ammonium molybdate, most preferably the catalyst is ammonium molybdate or molybdenum oxide.

Preferably, step A) is performed at a temperature between 160 °C and 300 °C, more preferably between 180 °C and 250 °C, most preferably between 200 °C and 220 °C.

The method may be performed in bulk, *i.e.* without substantial amount of solvent, using so-called baking process. Preferably all reactants, *i.e.* urea or derivative thereof, phthalic anhydride or derivative thereof, the metal salt and optionally the catalyst are grinded, optionally in a presence of small amount of the solvent, *e*.*g*. with less than 70 % of a solvent based on total weight of the starting materials, to form a slurry. The slurry is preferably subsequently subjected to a thermal treatment at a temperature between 160 °C and 300 °C.

Advantageously, the method of the invention allows for obtaining the phthalocyanine complex with a bio-based carbon content of at least 10 % relative to the total mass of carbon in the phthalocyanine complex, or at least 15 %, or at least 20 %, or at least 25 %, or at least 30 %, or at least 35 %, or at least 40 %, or at least 45 %, or at least 50 %, or at least 55 %, or at least 60 %, or at least 65 %, or at least 70 %, or at least 75 %, or at least 80 %, or at least 85 %, or at least 90 %, or at least 95 %, or at least 97 %, or 100 % or less, as determined according to ASTM D 6866-22. Such phthalocyanine complex production method preferably has a decreased carbon footprint and is long desired by the colourants industry and consumers of end-products comprising phthalocyanine complex.

Preferably, the method further comprises step B) and/or C):
B) recrystalising the phthalocyanine complex particles to obtain crystalline phthalocyanine complex particles, and/or
C) reducing the size of the phthalocyanine complex particles or the crystalline phthalocyanine complex particles to obtain size reduced phthalocyanine complex particles or size reduced crystalline phthalocyanine complex particles.

Step B) can be carried out by dissolving the crude phthalocyanine in concentrated acid, preferably sulfuric acid or oleum, and precipitation of the crude phthalocyanine in water.

Step C) can carried out by grinding. Suitably, grinding may be performed at ambient or at elevated temperatures, in dry or in humid conditions, with or without the presence of a grinding agent, *e*.*g*. sodium chloride, and optionally in a present of a solvent, preferably selected from the group consisting of xylene, nitrobenzene, chlorobenzene, alcohols, ketones, esters, and mixture thereof.

The steps of recrystalising and/or reducing the size of the phthalocyanine complex particles advantageously allow for obtaining phthalocyanine complex particles in the desired size, *e.g.* the particles having D90 = 50 µm, such as D90 between 5 and 25 µm, and in the desired crystalline form to obtain the phthalocyanine complex with the excellent colour performance, such as colour strength, tone, and purity among others.

The method may further comprise a post-synthesis modification of the crude phthalocyanine or the crystalline phthalocyanine complex particles, such as sulphonation, chlorosulphonation, or chloromethylation. The post-synthesis modification methods are disclosed in Löbbert, G. (2012), Phthalocyanines, in Ullmann's Encyclopedia of Industrial Chemistry, the disclosures of which is herewith completely incorporated by reference.

Suitably, the method further comprises the step of:
- oxidising bio-based *o*-xylene or substituted bio-based *o*-xylene to obtain phthalic anhydride or derivative thereof, wherein bio-based *o-*xylene or substituted bio-based o-xylene has a bio-based carbon content of at least 10 % relative to the total mass of carbon in o-xylene or substituted o-xylene, or at least 15 %, or at least 20 %, or at least 25 %, or at least 30 %, or at least 35 %, or at least 40 %, or at least 45 %, or at least 50 %, or at least 55 %, or at least 60 %, or at least 65 %, or at least 70 %, or at least 75 %, or at least 80 %, or at least 85 %, or at least 90 %, or at least 95 %, or at least 97 %, or 100 % or less, as determined according to ASTM D 6866-22.

Suitably, the method further comprises the step of:
- reacting bio-based furan or substituted bio-based furan with, preferably bio-based, maleic anhydride obtain phthalic anhydride or derivative thereof, wherein bio-based furan or substituted bio-based furan has a bio-based carbon content of at least 10 % relative to the total mass of carbon in furan or substituted furan, or at least 15 %, or at least 20 %, or at least 25 %, or at least 30 %, or at least 35 %, or at least 40 %, or at least 45 %, or at least 50 %, or at least 55 %, or at least 60 %, or at least 65 %, or at least 70 %, or at least 75 %, or at least 80 %, or at least 85 %, or at least 90 %, or at least 95 %, or at least 97 %, or 100 % or less, as determined according to ASTM D 6866-22. Preferably, bio-based maleic anhydride has a bio-based carbon content of at least 10 % relative to the total mass of carbon in maleic anhydride, or at least 15 %, or at least 20 %, or at least 25 %, or at least 30 %, or at least 35 %, or at least 40 %, or at least 45 %, or at least 50 %, or at least 55 %, or at least 60 %, or at least 65 %, or at least 70 %, or at least 75 %, or at least 80 %, or at least 85 %, or at least 90 %, or at least 95 %, or at least 97 %, or 100 % or less, as determined according to ASTM D 6866-22.

Preferably, the method further comprises the step of:
- oxidising bio-based levulinic acid to obtain bio-based maleic anhydride, wherein bio-based levulinic acid has a bio-based carbon content of at least 10 %, relative to the total mass of carbon in levulinic acid, or at least 15 %, or at least 20 %, or at least 25 %, or at least 30 %, or at least 35 %, or at least 40 %, or at least 45 %, or at least 50 %, or at least 55 %, or at least 60 %, or at least 65 %, or at least 70 %, or at least 75 %, or at least 80 %, or at least 85 %, or at least 90 %, or at least 95 %, or at least 97 %, or 100 % or less, as determined according to ASTM D 6866-22.

The method as presented herein advantageously allows for the synthesis of phthalocyanine complex with high bio-based carbon content, such as, *e.g.* 50-70 %, or up to 100 % bio-based carbon.

In another aspect the invention pertains to a colour composition comprising the phthalocyanine complex of the invention and preferably a carrier, more preferably a bio-based carrier.

Preferably, the colour composition has a bio-based content of at least 1 % relative to the total mass of carbon in the colour composition, preferably at least 2 %, or at least 5 %, or at least 10 %, or at least 15 %, or at least 20 %, or at least 25 %, or at least 30 %, or at least 35 %, or at least 40 %, or at least 45 %, or at least 50 %, or at least 55 %, or at least 60 %, or at least 65 %, or at least 70 %, or at least 75 %, or at least 80 %, or at least 85 %, or at least 90 %, or at least 95 %, or at least 97 %, or 100 % or less, as determined according to ASTM D 6866-22.

Suitably, the colour composition has a bio-based content of between 40 and 80 % relative to the total mass of carbon in the colour composition, such as between 45 and 75 %, or such as between 50 and 70 %, as determined according to ASTM 6866-22.

Suitably, the colour composition has a bio-based content of between 95 and 100 % relative to the total mass of carbon in the colour composition, as determined according to ASTM 6866-22.

Preferably, the carrier and/or bio-based carrier has a bio-based carbon content of at least 10 % relative to the total mass of carbon in the carrier, or at least 15 %, or at least 20 %, or at least 25 %, or at least 30 %, or at least 35 %, or at least 40 %, or at least 45 %, or at least 50 %, or at least 55 %, or at least 60 %, or at least 65 %, or at least 70 %, or at least 75 %, or at least 80 %, or at least 85 %, or at least 90 %, or at least 95 %, or at least 97 %, or 100 % or less, as determined according to ASTM D 6866-22.

Suitably, the carrier and/or bio-based carrier has a bio-based content of between 40 and 80 % relative to the total mass of carbon in the carrier, such as between 45 and 75 %, or such as between 50 and 70 %, as determined according to ASTM 6866-22.

Suitably, the carrier or the bio-based carrier is the liquid carrier.

Preferably, the colour composition comprises 1 % or more by total weight of the phthalocyanine complex of the invention, preferably 2 % or more, preferably 5 % or more, preferably 7% or more, preferably 10 % or more, preferably 15% or more, preferably 20 % or more, such as 25 % or more, and/or typically 30 % or less.

Preferably, the colour composition comprises the phthalocyanine complex of the invention in particulate form having D90 = 50 µm, more preferably D90 between 5 and 30 µm, and even more preferably D90 between 5 and 25 µm, as determined by an optical microscopy.

Preferably, the colour composition comprises a carrier, more preferably a bio-based carrier. Preferably, the colour composition comprises 10 % or more by total weight of the carrier, preferably the bio-based carrier, preferably 15 % or more, preferably 20 % or more, preferably 25 % or more, preferably 30 % or more, preferably 35 % or more, preferably 40 % or more, preferably 45 % or more, preferably 50% or more, preferably 55 % or more, preferably 60% or more, preferably 65 % or more, preferably 70 % or more, preferably 75 % or more, preferably 80 % or more, preferably 85 % or more, preferably 90% or more, preferably 95 % or more, such as 97 % or more, typically 99 % or less.

Preferably, the carrier is selected form the group consisting of waxes, polyesters, polyolefins, polyamides, aromatic polymers, and mixtures thereof.

Preferably, waxes are selected from the group consisting of hydrogenated vegetable oils, fatty acids, fatty acids methyl esters, fatty acids sorbitol esters, fatty acids sorbitan esters, fatty acids pentaerythritol esters, monoglicerides, diglicerides, triglicerides, fatty acids isosorbide esters, salts of fatty acids, amide waxes, polyethoxylated glycols and derivatives, polyethylene waxes and ethylenevinylacetate waxes, and mixtures thereof. Preferably, the waxes as are bio-based waxes.

Suitably, hydrogenated vegetable oils are selected from the group consisting of, hydrogenated canola oil, hydrogenated castor oil, hydrogenated coconut oil, hydrogenated colza oil, hydrogenated corn oil, hydrogenated cottonseed oil, hydrogenated dammar oil, hydrogenated false flax oil, hydrogenated hemp oil, hydrogenated jatropha oil, hydrogenated jojoba oil, hydrogenated linseed oil, hydrogenated mustard oil, hydrogenated nahor oil, hydrogenated palm oil, hydrogenated paradise oil, hydrogenated peanut oil, hydrogenated petroleum nut oil, hydrogenated pongamia oil, hydrogenated poppyseed oil, hydrogenated radish oil, hydrogenated ramtil oil, hydrogenated rapeseed oil, hydrogenated rice bran oil, hydrogenated safflower oil, hydrogenated salicornia oil, hydrogenated soybean oil, hydrogenated stillingia oil, hydrogenated sunflower oil, hydrogenated tigernut oil, hydrogenated tung oil, hydrogenated vernonia oil, and mixtures thereof.

Suitably, fatty acids are saturated or unsaturated fatty acids. Preferably, saturated fatty acids are selected from the group consisting of caprylic acid, capric acid, lauric acid, myristic acid, palmitic acid, stearic acid, arachidic acid, behenic acid, lignoceric acid, cerotic acid, and mixtures thereof. Preferably, unsaturated fatty acids are selected from the group consisting of myristoleic acid, palmitoleic acid, sapienic acid, oleic acid, elaidic acid, vaccenic acid, linoleic acid, linoelaidic acid, α-linolenic acid, arachidonic acid, eicosapentaenoic acid, erucic acid, docosahexaenoic acid, and mixtures thereof.

Suitably, salts of fatty acids are zinc, magnesium, calcium, sodium, lithium, or aluminium salts of saturated or unsaturated fatty acids, selected from the group consisting of caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, α-linolenic acid, arachidonic acid, eicosapentaenoic acid, erucic acid, docosahexaenoic acid, and mixtures thereof.

Suitably, amide waxes are amides of saturated or unsaturated fatty acids, selected from the group consisting of caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, α-linolenic acid, arachidonic acid, eicosapentaenoic acid, erucic acid, docosahexaenoic acid, and mixtures thereof.

Suitably, fatty acids methyl esters are methyl esters of saturated or unsaturated fatty acids, selected from the group consisting of caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, α-linolenic acid, arachidonic acid, eicosapentaenoic acid, erucic acid, docosahexaenoic acid, and mixtures thereof.

Suitably, fatty acids sorbitol esters are sorbitol mono-, di-, tri-, tetra-, penta-, or hexaesters of saturated or unsaturated fatty acids, selected from the group consisting of caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, α-linolenic acid, arachidonic acid, eicosapentaenoic acid, erucic acid, docosahexaenoic acid, and mixtures thereof.

Suitably, fatty acids sorbitan esters are sorbitan mono-, di-, tri-, tetraesters of saturated or unsaturated fatty acids, selected from the group consisting of caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, α-linolenic acid, arachidonic acid, eicosapentaenoic acid, erucic acid, docosahexaenoic acid, and mixtures thereof. Suitably, fatty acids pentaerythritol esters are pentaerythritol mono-, di-, tri-, or tetraesters of saturated or unsaturated fatty acids, selected from the group consisting of caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, α-linolenic acid, arachidonic acid, eicosapentaenoic acid, erucic acid, docosahexaenoic acid, and mixtures thereof. Suitably, monoglicerides, diglicerides, triglicerides are esters of glycerol and one, two, or three fatty acids, respectively. Preferably, the fatty acid is selected from the group consisting of caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, α-linolenic acid, arachidonic acid, eicosapentaenoic acid, erucic acid, docosahexaenoic acid, and mixtures thereof.

Suitably, fatty acids isosorbide esters are isosorbide mono- or diesters of saturated or unsaturated fatty acids, selected from the group consisting of caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, α-linolenic acid, arachidonic acid, eicosapentaenoic acid, erucic acid, docosahexaenoic acid, and mixtures thereof.

Waxes preferably comprise one or more selected from the group of natural oil based waxes, such as glycerol monostearate, magnesium stearate, zinc stearate, hydrogenated castor oil, amide waxes, such as stearamide, ethylene bis(stearamide), and/or synthetic waxes, such as monoesters of stearic acid, polyethoxylated glycols and derivatives, and esters of pentaerythritol, polyethylene waxes and ethylenevinylacetate waxes. Preferably, the natural oil waxes and the synthetic waxes are bio-based waxes.

The polyester may comprise one or more selected from the group consisting of aliphatic homopolymer polyesters, aliphatic copolymer polyesters, semi-aromatic copolymer polyesters, semi-aromatic homopolymer polyesters, aromatic copolymer polyesters, and aromatic homopolymer polyesters. The polyester preferably comprises polyethylene terephthalate (PET), and for example, virgin bottle grade PET, recycled PET (r-PET) or bio-based PET (bio-PET), cyclohexane dimethanol/PET copolymer (PETG), polyethylene naphthalate (PEN), polyethylene furanoate (PEF), polybutylene terephthalate (PBT), polytrimethylene terephthalate (PTT), polybutylene succinate (PBS), polylactic acid (PLA), polyhydroxyalkanoates (PHAs), polybutylene adipate terephthalate (PBAT), poly(hydroxybutyrate-*co*-valerate) (PHBV), and mixtures thereof. Suitable polyesters can as well include polymer linkages, side chains, and end groups different from the formal precursors of the simple polyesters previously specified.

Suitably, polyolefins are aliphatic homopolymers, aliphatic copolymers, and/or cyclic olefin polymers. Examples of such aliphatic polymers may be polyethylene (PE) and polypropylene (PP).

Suitably, polyamide may comprise one or more selected from the group consisting of aliphatic homopolymer polyamides, aliphatic copolymer polyamides, semi-aromatic copolymer polyamides, semi-aromatic homopolymer polyamides, aromatic copolymer polyamides, and aromatic homopolymer polyamides. The polyamide preferably comprises polyamide 4.6, (PA 4.6), polyamide 4.10 (PA 4.10), polyamide 4.12 (PA 4.12), polyamide 5.6 (PA 5.6), polyamide 6 (PA 6), polyamide 6.6 (PA 6.6), polyamide 6.10 (PA 6.10), polyamide 6.12 (PA 6.12), polyamide 10 (PA 10), polyamide 10.10 (PA 10.10), polyamide 10.12 (PA 10.12), polyamide 11 (PA 11), polyamide 12 (PA 12), polyphthalamide (PPA), aramid, e.g. poly-paraphenylene terephthalamide.

Suitably, aromatic polymers are aromatic homopolymers and/or aromatic copolymers, in particular aromatic polymers other than polyesters. Examples of such aromatic polymers may be polystyrene, polysulphone, polyphenylsulphone, and acrylonitrile-butadiene-styrene.

Preferably, the bio-based carrier is selected form the group consisting of bio-based waxes, polyesters, aliphatic polymers, aromatic polymers and mixtures thereof. The suitable bio-based waxes, polyesters, aliphatic polymers, and aromatic polymers include bio-based version of the bio-based waxes, polyesters, aliphatic polymers, aromatic polymers as previously specified.

Preferably, bio-based waxes are selected from the group consisting of hydrogenated vegetable oils, fatty acids, fatty acids methyl esters, fatty acids sorbitol esters, fatty acids sorbitan esters, fatty acids pentaerythritol esters, monoglicerides, diglicerides, triglicerides, salts of fatty acids, amide waxes, polyethoxylated glycols and derivatives, and mixtures thereof. The suitable bio-based hydrogenated vegetable oils, fatty acids, fatty acids methyl esters, fatty acids sorbitol esters, fatty acids sorbitan esters, fatty acids pentaerythritol esters, monoglicerides, diglicerides, triglicerides, salts of fatty acids, amide waxes, polyethoxylated glycols and derivatives include bio-based version of the hydrogenated vegetable oils, fatty acids, fatty acids methyl esters, fatty acids sorbitol esters, fatty acids sorbitan esters, fatty acids pentaerythritol esters, monoglicerides, diglicerides, triglicerides, salts of fatty acids, amide waxes, polyethoxylated glycols and derivatives as previously specified.

Preferably, bio-based polyesters are selected from the group consisting of bio-based PET, PETG, PEF, PBT, PTT, PBS, PBAT, PHBV, PLA, PHAs, and mixtures thereof.

Suitably, bio-based aliphatic polymers are selected from the group consisting of bio-based PE, PP, PA 4.6, PA 4.10, PA 4.12, PA 5.6, PA 6, PA 6.6, PA 6.10, PA 6.12, PA 10, PA 10.10, PA 10.12, PA 11, PA 12, and mixtures thereof.

Suitably, bio-based aromatic polymer is bio-based PS or ABS.

The colour composition according to the invention may further comprise optional additives that do not adversely affect the desired properties of the final product, e.g. a preform or a textile. The optional additives include, but are not limited to, dyes and pigments, scavengers, such as acetaldehyde scavengers and oxygen scavengers, stabilisers, antioxidants, visible light screening agents, UV light screening agents, extrusion aids, drying agents, fillers, anti-clogging agents, crystallisation aids, impact modifiers, additives designed to make the polymer more (bio-)degradable or combustible, and mixtures thereof. Preferably, the optional additives are used in an amount to provide a specific colour and/or to enhance the light protection of the preforms and/or textiles. The optional additives may be present in the colour composition in an amount neither adversely influencing the light transmittance property nor the specific colour nor other said desired properties.

Preferably, the dyes and pigments are selected from the group consisting of Solvent Yellow 43 (CAS number 19125-99-6/1226-96-9), Solvent Yellow 72 (CAS number 61813-98-7), Solvent Yellow 93 (CAS number 4702-90-3/61969-52-6), Solvent Yellow 114 (CAS number 75216-45-4), Disperse Yellow 64 (CAS number 10319-14-9), Disperse Yellow 201 (CAS number 80748-21-6), Disperse Yellow 241 (CAS number 83249-52-9), Solvent Violet 36 (CAS number 61951-89-1), Solvent Red 23 (CAS number 85-86-9), Solvent Red 26 (CAS number 477-79-6), Solvent Red 111 (CAS number 82-38-2), Solvent Red 135 (CAS number 71902-17-5), Solvent Red 149 (CAS number 71902-18-6/21295-57-8), Solvent Red 179 (CAS number 89106-94-5), Solvent Red 195 (CAS number 164251-88-1), Solvent Red 207 (CAS number 15958-68-6), Solvent Green 3 (CAS number 128-80-3), Solvent Green 28 (CAS number 71839-01-5), Disperse Blue 60 (CAS number 12217-80-0), Solvent Blue 36 (CAS number 14233-37-5), Solvent Blue 97 (CAS number 61969-44-6), Solvent Blue 101 (CAS number 6737-68-4), Solvent Blue 104 (CAS number 116-75-6), Solvent Orange 60 (CAS number 61969-47-9/6925-69-5), Disperse Orange 47 (CAS number 12236-03-2), Solvent Black 7 (CI number 50415:1, CAS number 8005-02-5), Pigment Blue 15:1 (CI number 74160, CAS number 147-14-8), Pigment Blue 15:3 (CI number 74160, CAS number 147-14-8), Pigment Green 7 (CI number 74260, CAS number 1328-53-6), Pigment Orange 43 (CI number 71105, CAS number 4424-06-0), Pigment Orange 64 (CI number 12760, CAS number 72102-84-2), Pigment Orange 72 (CI number 211095, CAS number 78245-94-0), Pigment Red 122 (CI number 73915, CAS number 980-26-7), Pigment Red 144 (CI number 20735, CAS number 5280-78-4), Pigment Red 149 (CI number 71137, CAS number 4948-15-6), Pigment Red 177 (CI number 65300, CAS number 4051-63-2), Pigment Red 178 (CI number 71155, CAS number 3049-71-6), Pigment Red 179 (CI number 71130, CAS number 5521-31-3), Pigment Red 187 (CI number 12486, CAS number 59487-23-9), Pigment Red 202 (CI number 73907, CAS number 3089-17-6), Pigment Red 214 (CI number 200660, CAS number 40618-31-3), Pigment Red 220 (CI number 20055, CAS number 68259-05-2), Pigment Red 242 (CI number 20067, CAS number 52238-92-3), Pigment Red 247 (CI number 15915, CAS number 43035-18-3), Pigment Red 254 (CI number 56110, CAS number 84632-65-5), Pigment Red 264 (CI number 561300, CAS number 88949-33-1), Pigment Violet 19 (CI number 73900, CAS number 1047-16-1), Pigment Violet 23 (CI number 51319, CAS number 6358-30-1), Pigment Violet 29 (CI number 71129, CAS number 81-33-3), Pigment Yellow 109 (CI number 56284, CAS number 5045-40-9), Pigment Yellow 110 (CI number 56280, CAS number 5590-18-1), Pigment Yellow 119 (CI number 77496, CAS number 68187-51-9), Pigment Yellow 128 (CI number 20037, CAS number 79953-85-8), Pigment Yellow 138 (CI number 56300, CAS number 30125-47-4), Pigment Yellow 147 (CI number 60645, CAS number 4118-16-5), Pigment Yellow 151 (CI number 13980, CAS number 31837-42-0), Pigment Yellow 180 (CI number 21290, CAS number 77804-81-0), Pigment Yellow 181 (CI number 11777, CAS number 74441-05-7), Pigment Yellow 183 (CI number 18792, CAS number 65212-77-3) Pigment Yellow 191 (CI number 18795, CAS number 129423-54-7), Pigment Yellow 53 (CI number 77788, CAS number 8007-18-9), Pigment Yellow 62 (CI number 13940, CAS number 12286-66-7), Pigment Yellow 95 (CI number 20034, CAS number 5280-80-8), Pigment Blue 60 (CI number 69800, CAS number 81-77-6); and/or inorganic compounds selected from the group consisting of Pigment Black 26 (CI number 77494, CAS number 68186-94-7), Pigment Brown 24 (CI number 77310, CAS number 68186-90-3), Pigment Brown 29 (CI number 77500, CAS number 12737-27-8), Pigment Green 36 (CI number 74265, CAS number 14302-13-7), Pigment Green 50 (CI number 77377, CAS number 68186-85-6), Pigment Red 101 (CI number 77491, CAS number 1332-37-2), Pigment Black 28 (CI number 77428, CAS number 68186-91-4), Pigment Black 29 (CI number 77498, CAS number 68187-50-8), Pigment Black 30 (CI number 77504, CAS number 71631-15-7), Pigment Black 33 (CI number 77537, CAS number 68186-94-7 or 75864-23-2), Pigment Brown 29 (CI number 77500, CAS number 12737-27-8), Pigment Brown 33 (CI number 77503, CAS number 68186-88-9), Pigment Blue 29 (CI number 77007, CAS number 057455-37-5), Pigment Blue 28 (CI number 77346, CAS number 1345-16-0), Pigment Blue 36 (CI number 77343, CAS number 68187-11-1), Pigment Green 17 (CI number 77288, CAS number 1308-38-9), Pigment Yellow 164 (CI number 77899, CAS number 68412-38-4), Pigment Yellow 184 (CI number 771740, CAS number 14059-33-7), Pigment Yellow 42 (CI number 77492, CAS number 51274-00-1), and oxides comprising metals or elements selected from the group consisting of Na, Al, Si, S, Zn, Ni, Fe, Mn, Ti, V, Bi, Co, Cr, Cu, Sn, and Sb. The colour composition may comprise one or more dyes and pigments.

The (optional) additives may be present in the colour composition in an amount of up to 25 % , based on the total weight of the colour composition. In particular, these additives are present in the colour composition in amounts of 20% or less by total weight of the colour composition, such as 15 % or less, or 10 % or less, or 7.5 % or less, or 5 % or less, or 2.5 % or less.

The invention has been described by reference to various embodiments, and methods. The skilled person understands that features of various embodiments and methods can be combined with each other.

All references cited herein are hereby completely incorporated by reference to the same extent as if each reference were individually and specifically indicated to be incorporated by reference and were set forth in its entirety herein.

The use of the terms "a" and "an" and "the" and similar referents in the context of describing the invention (especially in the context of the claims) are to be construed to cover both the singular and the plural, unless otherwise indicated herein or clearly contradicted by context. The terms "comprising", "having", "including" and "containing" are to be construed as open-ended terms (*i.e.,* meaning "including, but not limited to") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. The use of any and all examples, or exemplary language (*e*.*g*., "such as") provided herein, is intended merely to better illuminate the invention and does not pose a limitation on the scope of the invention unless otherwise claimed. No language in the specification should be construed as indicating any non-claimed element as essential to the practice of the invention. For the purpose of the description and of the appended claims, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

Preferred embodiments of this invention are described herein. Variation of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject-matter recited in the claims appended hereto as permitted by applicable law. Moreover, any combination of the above-described elements in all possible variations thereof is encompassed by the invention unless otherwise indicated herein or otherwise clearly contradicted by context. The claims are to be construed to include alternative embodiments to the extent permitted by the prior art.

For the purpose of clarity and a concise description features are described herein as part of the same or separate embodiments, however, it will be appreciated that the scope of the invention may include embodiments having combinations of all or some of the features described.

Hereinafter, the invention will be illustrated in more detail, according to specific examples. However, the invention may be embodied in many different forms and should not be construed as being limited to the embodiments set forth herein. Rather, these example embodiments are provided so that this description will be thorough and complete, and will fully convey the scope of the invention to those skilled in the art.

### Examples

### Example 1

A mixture of the following three copper phthalocyanines was prepared as follows using bio-sourced starting materials.

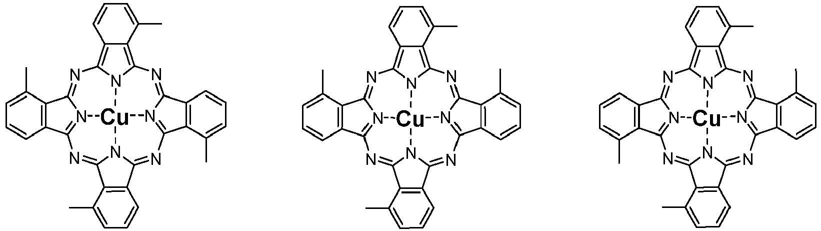

Methylated phthalic anhydride (10 g), urea (13 g) and trichlorobenzene (30 ml) were mixed in a vessel, equipped with an oil bath and stirrer. Then copper(II)chloride (2.4 g) and 0.05 g of ammonium molybdate were added. The mixture was heated up slowly within 1 h to 140 °C and then ramped up to 180 °C for remaining 0.5 hr. Methylated copper phthalocyanine was formed within 1.5 hr, filtered and washed with trichlorobenzene, then methanol, and then water. The blue solid was then dried within a vacuum oven. The yield of methylated copper phthalocyanine was 80-96 %.

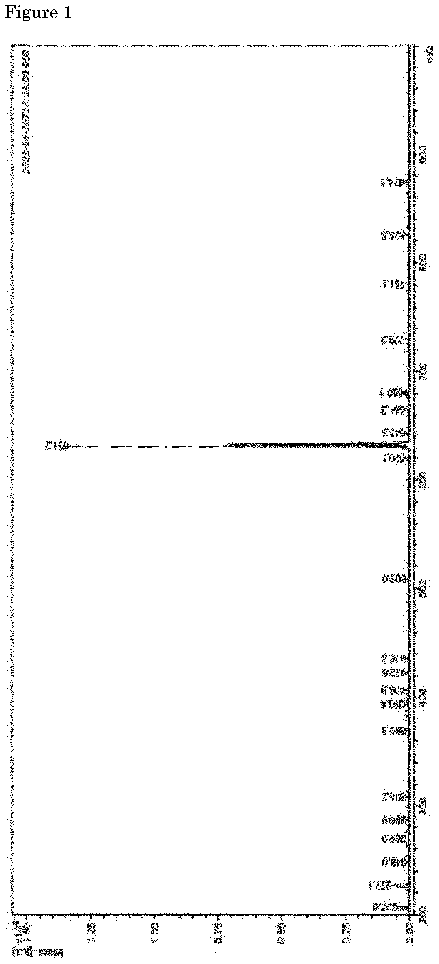

The chemical formula of this copper phthalocyanines is C₁₁C₃₆N₈H₂₄. The exact mass of the copper phthalocyanines is 631.14 g/mol. The molecular weight as determined by gel permeation chromatography was 632.19 g/mol. Quantitative elemental analysis yielded C, 68.40; H, 3.83; Cu, 10.05; and N, 17.73. Analysis by mass spectrometry of this Example is show in Figure 1.

### Example 2

The following copper phthalocyanines was prepared as follows using bio-sourced starting materials.

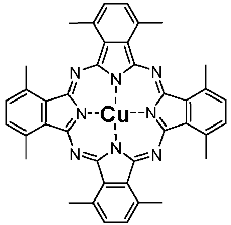

Dimethylated phthalic anhydride (10 g), urea (13 g) and trichlorobenzene (30 ml) were mixed in a vessel, equipped with an oil bath and stirrer. Then copper(II)chloride (2.4 g) and 0.05 g of ammonium molybdate were added. The mixture was heated up slowly within 1 h to 140 °C and then ramped up to 180 °C for remaining 0.5 hr. Dimethylated copper phthalocyanine was formed within 1.5 hr, filtered and washed with trichlorobenzene, then methanol, and then water. The blue solid was then dried within a vacuum oven. The yield of dimethylated copper phthalocyanine was 80-96 %.

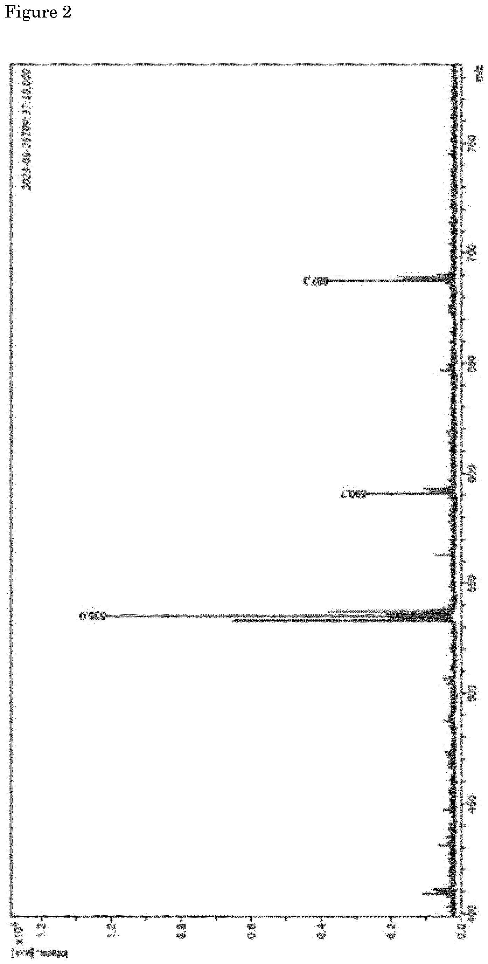

The chemical formula of this copper phthalocyanines is CuC₄₀N₈H₃₂. The exact mass of the copper phthalocyanines is 687.20 g/mol. The molecular weight as determined by gel permeation chromatography was 688.30 g/mol. Quantitative elemental analysis yielded C, 69.80; H, 4.69; Cu, 9.23; and N, 16.28. Analysis by mass spectrometry of this Example is show in Figure 2.

### Example 3

In a further example, the thermogravimetric analysis of the unsubstituted copper phthalocyanine shown below was compared with the thermogravimetric analysis of the substituted copper phthalocyanine mixture of Example 1.

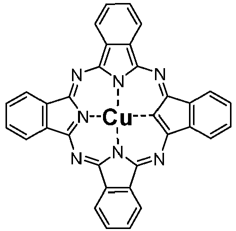

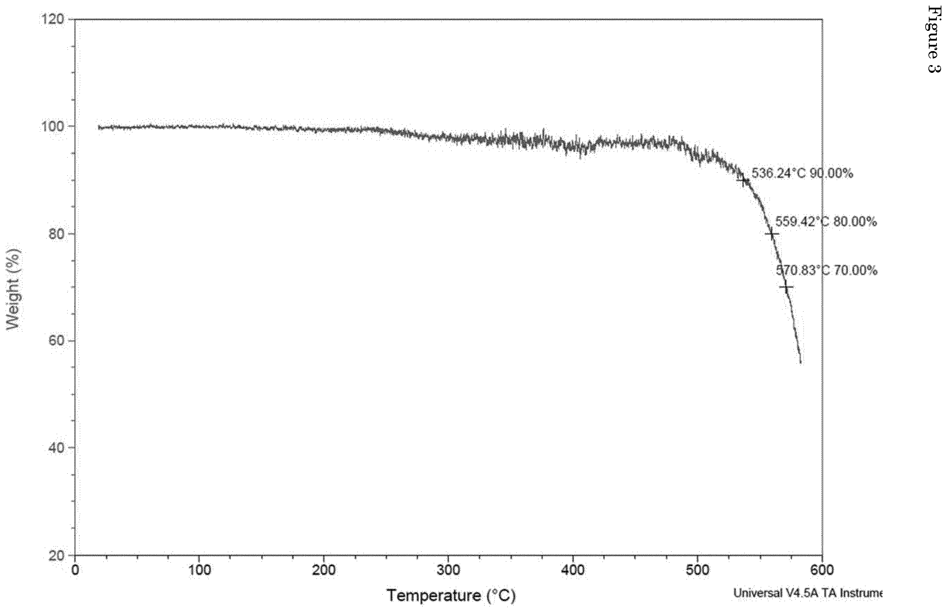

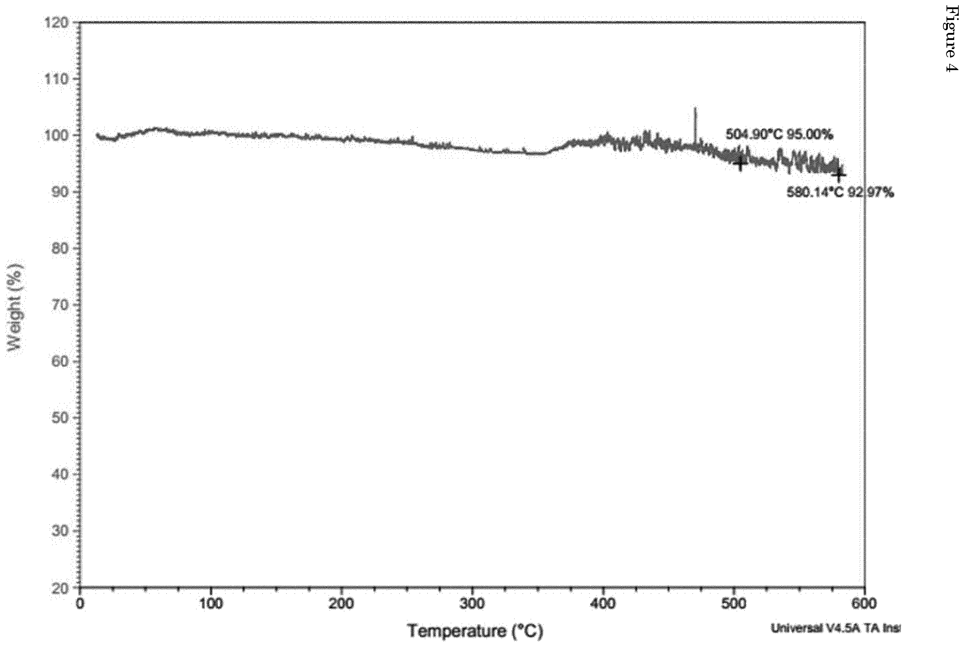

The thermogravimetric analysis of the unsubstituted copper phthalocyanine is shown in Figure 3. This figure shows that at temperatures higher than about 500 °C, the phthalocyanine thermally degrades. The thermogravimetric analysis of the substituted copper phthalocyanine of Example 1 is shown in Figure 4. As compared to the unsubstituted phthalocyanine, this sample is surprisingly more thermally stable and degradation of the phthalocyanine at temperatures higher than about 500 °C is significantly less.

## Claims

1. Phthalocyanine complex of general formula (I): 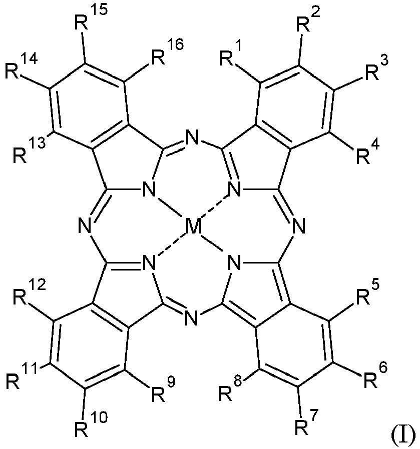 wherein R¹ - R¹⁶ are the same or different and each R¹ to R¹⁶ is individually selected from the group consisting of hydrogen, C₁-C₂₂ alkyl, C₃-C₂₂ alkenyl, C₃-C₂₂ alkynyl, chlorine, bromine, fluorine, iodine, sulphonate, and [(CH₂)ₙ-O-(CH₂)ₘ]ₒ, wherein n = 0-16, m = 1-16, o = 1-20, wherein M is selected from the group consisting of Cu, Ni, Zn, Co, Fe, Mn, and Al, and wherein the phthalocyanine complex has a bio-based carbon content of at least 10 % relative to the total mass of carbon in the phthalocyanine complex, as determined according to ASTM D 6866-22.

2. Phthalocyanine complex according to claim 1, wherein each R¹ to R¹⁶ is hydrogen.

3. Phthalocyanine complex according to claim 1,group wherein one of R¹ and R⁴ is methyl and one of R¹ and R⁴ is hydrogen, wherein one of R⁵ and R⁸ is methyl and one of R⁵ and R⁸ is hydrogen, wherein one of R⁹ and R¹² is methyl and one of R⁹ and R¹² is hydrogen, wherein one of R¹³ and R¹⁶ is methyl and one of R¹³ and R¹⁶ is hydrogen, and wherein each of R², R³, R⁶, R⁷, R¹⁰, R¹¹, R¹⁴, and R¹⁵ is hydrogen.

4. Phthalocyanine complex according to claim 1 group, wherein each of R¹, R⁴, R⁵, R⁸, R⁹, R¹², R¹³, and R¹⁶ is methyl, and wherein each of R², R³, R⁶, R⁷, R¹⁰, R¹¹, R¹⁴, and R¹⁵ is hydrogen.

5. Phthalocyanine complex according to claim 1 group, wherein at least one of R¹ to R¹⁶ is chlorine, bromine, fluorine, and/or iodine, preferably wherein at least one of R², R³, R⁶, R⁷, R¹⁰, R¹¹, R¹⁴, and R¹⁵ is chlorine, bromine, fluorine, and/or iodine, more preferably at least one of R², R³, R⁶, R⁷, R¹⁰, R¹¹, R¹⁴, and R¹⁵ is chlorine or bromine.

6. Phthalocyanine complex according to any of claims 1-5, wherein at least 50 % of the number of the phthalocyanine complex particles is in a crystal form, as determined by X-ray diffraction.

7. Phthalocyanine complex according to any of the preceding claims, wherein the phthalocyanine complex is in particulate form having D90 = 50 µm, preferably D90 between 5 and 30 µm, and more preferably D90 between 5 and 25 µm, as determined by an optical microscopy.

8. Phthalocyanine complex according to any of the preceding claims, wherein the phthalocyanine complex has a bio-based carbon content between 40 and 80 % relative to the total mass of carbon in the phthalocyanine complex, preferably between 45 and 75 %, more preferably between 50 and 70 %, as determined according to ASTM D 6866-22.

9. Method for preparing phthalocyanine complex of claims 1-8 comprising step:
A) reacting urea or derivative thereof, phthalic anhydride or derivative thereof, and a metal salt, optionally in a solvent, optionally in the present of a catalyst to obtain the phthalocyanine complex particles,
wherein phthalic anhydride or derivative thereof has a bio-based carbon content of at least 10 % relative to the total mass of carbon in phthalic anhydride or derivative thereof, as determined according to ASTM D 6866-22.

10. Method for preparing phthalocyanine complex according to claim 9, the method further comprising the step of:
B) recrystallising the phthalocyanine complex particles to obtain crystalline phthalocyanine complex particles, and/or
C) reducing the size of the phthalocyanine complex particles or crystalline phthalocyanine complex particles to obtain size reduced phthalocyanine complex particles or size reduced crystalline phthalocyanine complex particles.

11. Method for preparing phthalocyanine complex according to claim 9 or 10, the method further comprising the step of:
oxidising bio-based o-xylene or substituted bio-based o-xylene to obtain phthalic anhydride or derivative thereof,
wherein bio-based o-xylene or substituted bio-based o-xylene has a bio-based carbon content of at least 10 % relative to the total mass of carbon in o-xylene or substituted o-xylene, as determined according to ASTM D 6866-22.

12. Method for preparing phthalocyanine complex according to claim 9 or 10, the method further comprising the step of:
reacting bio-based furan or substituted bio-based furan with maleic anhydride obtain phthalic anhydride or derivative thereof,
wherein bio-based furan or substituted bio-based furan has a bio-based carbon content of at least 10 % relative to the total mass of carbon in furan or substituted furan, as determined according to ASTM D 6866-22, and preferably wherein maleic anhydride has a bio-based carbon content of at least 10 % relative to the total mass of carbon in maleic anhydride, as determined according to ASTM D 6866-22.

13. Method for preparing phthalocyanine complex according to claim 12, the method further comprising the step of:
oxidising bio-based levulinic acid to obtain bio-based maleic anhydride, wherein bio-based levulinic acid has a bio-based carbon content of at least 10 % relative to the total mass of carbon in levulinic acid, as determined according to ASTM D 6866-22.

14. Colour composition comprising the phthalocyanine complex according to any of claims 1-7 and preferably a carrier, more preferably a bio-based carrier, and preferably wherein colour composition has a bio-based carbon content of at least 1 % relative to the total mass of carbon in the colour composition, more preferably at least 10 %, as determined according to ASTM D 6866-22.

15. Use of the phthalocyanine complex according to any of claims 1-8 as a dye or a pigment, preferably in cosmetics, colour compositions, and printing inks.
